Europäisches Patentamt

European Patent Office

Office européen des brevets

(19)

(11) Veröffentlichungsnummer: **0 287 755**
**B1**

(12) # EUROPÄISCHE PATENTSCHRIFT

(45) Veröffentlichungstag der Patentschrift:
25.04.90

(21) Anmeldenummer: 88101285.0

(22) Anmeldetag: 29.01.88

(51) Int. Cl.⁴: **F16L 23/04**

(54) **Stossverbindung zwischen zwei dünnwandigen runden Blechrohrabschnitten.**

(30) Priorität: 22.04.87 DE 3713461

(43) Veröffentlichungstag der Anmeldung:
26.10.88 Patentblatt 88/43

(45) Bekanntmachung des Hinweises auf die Patenterteilung:
25.04.90 Patentblatt 90/17

(84) Benannte Vertragsstaaten:
AT BE CH DE ES FR GB IT LI NL SE

(56) Entgegenhaltungen:
DE-A- 890 588
DE-A- 3 314 064
DE-C- 3 537 504

(73) Patentinhaber: METU-System Meinig KG, Seitinger Strasse 186, D-7201 Rietheim-Wellheim 2(DE)

(72) Erfinder: Meinig, Manfred, Seitinger Strasse 186, D-7201 Rietheim-Wellheim 2(DE)

(74) Vertreter: Patentanwälte Dipl.-Ing. Klaus Westphal Dr. rer. nat. Bernd Mussgnug Dr. rer.nat. Otto Buchner, Waldstrasse 33, D-7730 VS-Villingen-Schwenningen(DE)

## Beschreibung

Die Erfindung betrifft eine Stoßverbindung nach dem Oberbegriff des Anspruchs 1.

Eine derartige Stoßverbindung ist bereits aus der DE-B 35 37 504 bekannt. Beim Zusammenfügen der bekannten Stoßverbindung auf einer Baustelle ist es erforderlich, die beiden Rohrenden radial und axial ziemlich gut auszurichten, damit die Verbindung durch den auf die Flanschringe aufzusetzenden Spannring in einwandfreier Weise erfolgen kann. Dies ist zwar bei kleineren Rohrdurchmessern gut möglich, nicht aber bei größeren und schwereren Rohren oder bei beengten Platzverhältnissen. Wird das Ende des zu montierenden Rohres radial gegen das bereits montierte Rohrende versetzt und schräg auf dieses Rohrende aufgesetzt, so kann es vorkommen, daß der Ringbord des zu montierenden Rohres ins Innere des bereits festliegenden Rohres zu liegen kommt. Beim Anziehen des aufgesetzten Spannrings kann nun die erwünschte radiale Ausrichtung nicht selbsttätig erfolgen, da der Ringbord im Inneren des gegenüberliegenden Rohres eingehängt ist. Da der Spannring beim Anziehen gleichzeitig eine axiale Spannkraft ausübt, wird der Ringbord daran gehindert, sich vom fest montierten Rohr wegzubewegen und so aus dem Rohrinneren herauszugelangen. Der axiale Versatz der beiden Rohrenden wird daher beim Anziehen des Spannrings aufrechterhalten bleiben. Die einzige Möglichkeit zur Beseitigung dieses Mißstandes besteht darin, den bereits angezogenen Spannring wieder zu lösen, die Rohre axial und radial auszurichten und sodann den Spannring erneut umzulegen und anzuziehen.

Auch ist beim Zusammenfügen der Stoßverbindung nach der DE-B 35 37 504 das Festhalten der aufgesetzten Flanschringe an den Ringborden der Rohre vor dem Aufsetzen und Festziehen des Spannrings nicht ganz einfach. Nach der genannten Patentschrift werden zu diesem Zweck jeweils die Flanschringe festhaltende Sicken an den Rohrenden vorgesehen. Dies verteuert natürlich die Herstellung der Stoßverbindung.

Durch die Erfindung soll die eingangs genannte Stoßverbindung so verbessert werden, daß ein Verhaken eines Ringbords im gegenüberliegenden Rohrende nicht mehr möglich ist und gleichzeitig die auf die Rohrenden aufgesetzten Flanschringe an den Ringborden auch vor dem Festziehen des Spannrings festgehalten werden.

Diese Aufgabe wird erfindungsgemäß durch die kennzeichnenden Merkmale des Anspruchs 1 gelöst.

Bei der Herstellung der erfindungsgemäßen Stoßverbindung müssen lediglich die Flanschringe jeweils auf die zugehörigen Ringborde aufgesetzt bzw. aufgesteckt werden, wodurch sie in der richtigen Lage bezüglich der Rohrenden festgelegt sind. Ein Verhaken der Ringborde in dem gegenüberliegenden Rohrende ist durch die Einfügung derselben in den Schlitz des jeweiligen Flanschringes ausgeschlossen, und es kann beim Aufsetzen und Anziehen des Spannrings eine selbsttätige axiale und radiale Ausrichtung der beiden Rohrenden auch ohne vorherige genaue Ausrichtung unbehindert erfolgen.

Bei einer besonders einfachen Ausführungsform der Erfindung stoßen die beiden freien Längskanten des Flanschringes unter Bildung des Schlitzes, in den der zugehörige Ringbord eingefügt wird, in einem rechten Winkel aufeinander. Diese Ausführungsform ist vor allem bei verhältnismäßig starkwandiger Ausführung des Flanschprofils vorzuziehen.

Wünscht man eine etwas festere Einklemmung des Ringbords, so kann insbesondere bei dünnwandigerer Ausführung des Flanschprofils gemäß Anspruch 2 die zum Ringbord parallele Wand doppelwandig ausgebildet werden, wobei der Ringbord zwischen die beiden Teilwände eingepreßt wird. Hierdurch ergibt sich ein sehr fester Sitz.

Bei der erfindungsgemäßen Ausbildung der Stoßverbindung ergibt sich überdies die Möglichkeit einer besonders einfachen und guten Abdichtung, indem der in den Schlitz eingefügte Ringbord gemäß Anspruch 3 in Dichtmasse eingebettet wird. Die Abdichtung ist auf diese Weise vollständig geschützt und kann nicht bei der Montage der Rohrenden in ihrer Lage verändert und ihrer Funktion beeinträchtigt werden.

Anhand der Figuren werden Ausführungsbeispiele der Erfindung näher erläutert. Es zeigt:

Fig. 1 einen Axialschnitt durch eine Stoßverbindung,

Fig. 2 eine verkleinerte Darstellung der in Fig. 1 gezeigten Stoßverbindung während der Montage des Spannringes,

Fig. 3 einen Teilschnitt durch ein Rohrende mit aufgesetztem Flanschring gemäß einer ersten Ausführungsform und

Fig. 4 einen der Fig. 3 ähnlichen Teilschnitt durch eine zweite Ausführungsform.

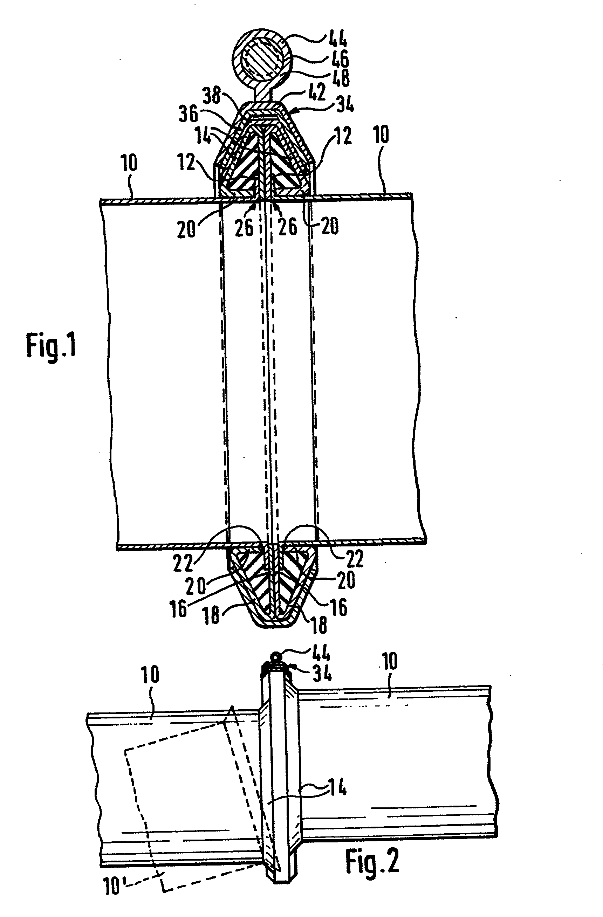

Die in den Figuren 1 - 3 dargestellte Stoßverbindung verbindet zwei Rohrenden 10 aus dünnwandigem rundem Blechrohr miteinander. Jedes Rohr 10 ist an seinem Ende zu einem kreisringförmigen radialen Ringbord 12 aufgebördelt. An jedem Ringbord 12 liegt ein Flanschring 14 mit dreieckförmigem Hohlprofil an. Jeder Flanschring 14 weist dabei eine radiale am Ringbord 12 anliegende Wand 16, eine vom äußeren Ende der Wand 16 schräg zum Rohr zurückführende Wand 18 und eine am Rohr 10 anliegende Wand 20 auf.

Auf die Außenseite der beiden Flanschringe 14, und zwar insbesondere auch die schrägen Wände 18 derselben, ist ein Spannring 34 aufgesetzt, der in nicht gezeigter Weise in axialer Richtung unterbrochen ist, so daß er aufgeweitet und auf die Flanschringe aufgesetzt werden kann. Die beiden Enden 36 und 38 des Spannrings 34 überlappen sich beim Festziehen desselben in der aus Fig. 1 ersichtlichen Weise. Am äußeren Spannringende 36 ist eine Schürze 42 angeschweißt, mit der eine in Umfangsrichtung des Spannrings 34 verlaufende Führungshülse 44 verbunden ist. In der Führungshülse 44 ist der Schraubenteil 46 eines mit dem inneren Spannringende 38 fest verbundenen Schraubenbügels 48 gleitend geführt.

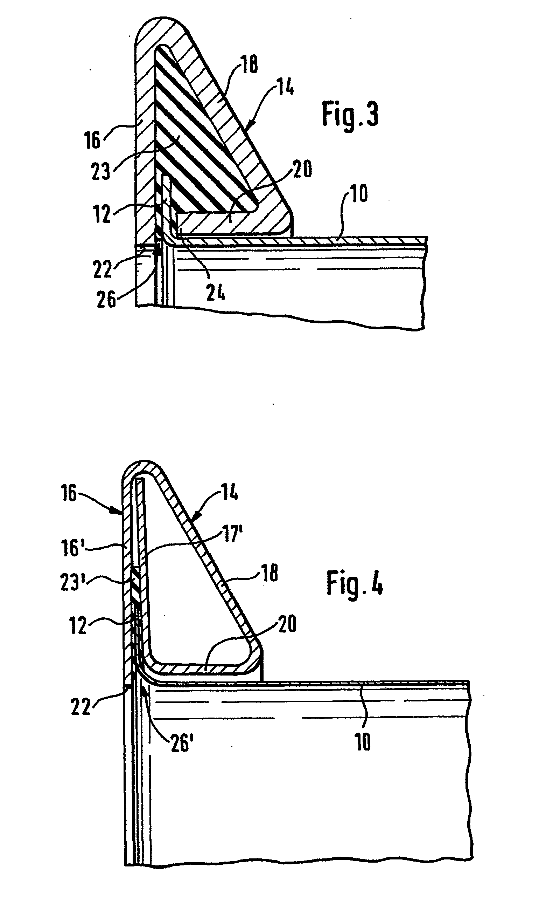

Bei der in Fig. 3 gezeigten Ausführungsform weist die zum Ringbord 12 parallele radiale Wand 16 des Flanschrings 14 eine radial innere freie Kante 22 auf, die zusammen mit der freien Kante 24 der parallel zum Rohrende 10 verlaufenden Wand 20 einen Schlitz 26 bildet, in den der Ringbord 12 eingefügt ist. Das Hohlprofil des Flanschrings 14 ist mit einer Dichtmasse 23 ausgefüllt, in die der Ringbord 12 größtenteils eingebettet ist.

Bei der in Fig. 4 dargestellten Ausführungsform ist die radiale Wand 16 des Flanschrings 14 als Doppelwand ausgebildet und weist zwei etwa parallel bzw. durch das Einpressen des Ringbords 12 leicht schräg zueinander verlaufende, an beiden Seiten des Ringbordes 12 anliegende Teilwände 16' und 17' auf. Vom äußeren Ende der Teilwand 16' geht die schräg zum rohrende 10 zurückführende Wand 18 aus, und die sich am Rohrende 10 anliegende Wand 20 anschließt. An das zur Teilwand 16' zu gelegene Ende der Wand 20 schließt sich die radial nach außen weisende Teilwand 17' an, an derem radial äußeren Ende sich die zweite freie Kante des Flanschrings 14 befindet. Von der radial inneren Seite her ist der Ringbord 12 in den Schlitz 26' zwischen den Teilwänden 16' und 17' des Flanschrings 14 eingefügt. Dieses Einfügen kann mit Preßsitz erfolgen, so daß in jedem Falle eine gute Festlegung des Flanschrings 14 auf dem Rohrende 10 erfolgt.

Zwischen die Wände 16' und 17' ist eine Dichtmasse 23' eingebracht, in die der Ringbord 23 zum größten Teil eingebettet ist. Die Dichtmasse 23' ist wie die Dichtmasse 23 beim Ausführungsbeispiel der Fig. 3 gegen mechanische Beschädigung und Beanspruchung von außen her weitgehend geschützt. Dadurch ist eine dichte und dauerhafte Verbindung der Flanschringe mit den Rohrenden gewährleistet.

Zum Aufsetzen des Spannrings 34 auf die bereits montierten Flanschringe 14 wird der zwar schon einen geschlossenen Ring mit sich überlappenden Enden bildende, jedoch möglichst weit geöffnete Spannring 34 über den Flanschring 14 des bereits fest montierten Rohrabschnitts 10 in der aus Fig. 2 ersichtlichen Weise eingehängt. Sodann wird der noch nicht fest montierte Rohrabschnitt 10 in der in Fig. 2 gestrichelt eingezeichneten schrägen Lage 10' von unten mit seinem Flanschring 14 in den lose auf dem gegenüberliegenden Rohrende hängenden Spannring 34 eingehängt und sodann nach oben in die in ausgezogenen Linien dargestellte Stellung gekippt. Anschließend kann der Spannring 34 in einer nicht dargestellten Weise festgezogen werden wodurch die beiden Verbindungsflansche 14, vorzugsweise unter Zwischenlegung einer nicht dargestellten Dichtung, gegeneinandergepreßt werden.

## Patentansprüche

1. Stoßverbindung zwischen zwei runden Rohrabschnitten mit je einem am Rohrende (10) radial abstehenden Ringbord (12), wobei die Rohrabschnitte als dünnwandige Blechrohrabschnitte ausgebildet sind, je ein Flanschring (14) auf die Außenseite jedes Blechrohrabschnittes aufgesetzt ist, der am zugehörigen Ringbord (12) anliegt, jeder Flanschring (14) ein im wesentlichen geschlossenes Hohlprofil mit dreieckigem Querschnitt besitzt, die schräg zum jeweiligen Ringbord (12) liegende Dreieckseite (18) des Hohlprofils vom Ringbord (12) und vom Rohrabschnitt wegweist, und wobei die beiden Flanschringe (14) durch einen von außen aufgesetzten festziehbaren Spannring (34) zusammengehalten sind, dadurch gekennzeichnet, daß die zum Ringbord (12) parallele Wand (16) jedes Flanschrings (14) an ihrem radial inneren Rand eine freie Kante (22) aufweist, und daß der zugehörige Ringbord (12) in den Schlitz (26, 26') zwischen der Kante (22) und einer angrenzenden Wand (20, 17') des Flanschrings (14) eingefügt ist.

2. Stoßverbindung nach Anspruch 1, dadurch gekennzeichnet, daß die zum Ringbord (12) parallele Wand (16) jedes Flanschrings (14) als Doppelwand (16', 17') ausgebildet ist, wobei die zum gegenüberliegenden Rohrende (10) der Stoßverbindung hinliegende Teilwand (16') die freie Kante (22) trägt, und daß der zugehörige Ringbord (12) zwischen die die Doppelwand (16) bildenden Teilwände (16', 17') eingefügt ist.

3. Stoßverbindung nach Anspruch 1 oder 2, dadurch gekennzeichnet, daß der Ringbord (12) wenigstens teilweise in eine das Innere des Flanschrings (14) ausfüllende bzw. zwischen die Teilwände (16', 17') eingebrachte Dichtmasse (23, 23') eingebettet ist.

## Claims

1. A butt coupling between two cylindrical sections of pipe each of which comprises a radially projecting circular rim (12) at the end of the pipe (10), wherein the sections of pipe are thin-walled sheet metal pipe sections, a flanged ring (14) is placed on the outside of each sheet metal pipe section and rests against the circular rim (12) of the pipe in question, each flanged ring (14) has a substantially closed hollow profile with a tringular cross-section, the side (18) of the triangle of the hollow profile which is inclined relative to the circular rim (12) in question is directed away from the circular rim (12) and from the section of pipe, and wherein both flanged rings (14) are held together by a clamping ring (34) which can be tightened from outside, characterized in that the wall (16) of each flanged ring (14) which is parallel to the circular rim (12) comprises a free edge (22) on its radially internal border, and in that the circular rim (12) which is associated with it is inserted in the slit (26, 26') between the edge (22) and an adjacent wall (20, 17') of the flanged ring (14).

2. A butt coupling according to claim 1, characterized in that the wall (16) of each flanged ring (14) which is parallel to the circular rim (12) is constructed as a double wall (16', 17') wherein the wall portion (16') which is on the inside in relation to the end of the pipe (10) located opposite it bears the free edge (22), and in that the circular rim (12) which is associated with it is inserted between the wall portions (16', 17') which form the douple wall (16).

3. A butt coupling according to claim 1 or 2, characterized in that the circular rim (12) is embedded at least partially in a mass of sealing compound (23, 23′) which fills the interior of the flanged ring (14) or is introduced between the wall portions (16′, 17′).

**Revendications**

1. Jonction bout à bout entre deux tronçons de tuyau avec chacun un rebord annulaire (12) s'éloignant radialement de l'extrémité du tuyau (10), les tronçons de tuyau étant réalisés comme tronçons de tuyau en tôle à paroi mince, respectivement un anneau de bride (14) étant placé sur le côté extérieur de chaque tronçon de tuyau, anneau qui est situé contre le rebord annulaire (12) correspondant, chaque anneau de bride (14) possédant un profil creux essentiellement fermé à section triangulaire, le côté du triangle (18) fermé à section triangulaire, le côté du triangle (18) du profil creux incliné par rapport au rebord annulaire (12) correspondant s'écartant du rebord annulaire (12) et du tronçons de tuyau, et les deux anneaux de bride (14) étant maintenus ensemble par un collier tendeur (34) blocable mis en place de l'extérieur, caractérisée en ce que la paroi (16) de chaque anneau de bride (14) parallèle au rebord annulaire (12) comprend radialement sur son côté intérieur un bord libre (22), et en ce que le rebord annulaire (12) correspondant est inséré dans la fente (26, 26′) entre le bord (22) et une paroi (20, 17′) de l'anneau de bride (14).

2. Jonction bout à bout selon la revendication 1, caractérisée en ce que la paroi (16) parallèle au rebord annulaire (12) de chaque anneau de bride (14) est réalisée en paroi double (16′, 17′), la partie de paroi (16′) se trouvant vers l'extremité de tuyau (10) de la jonction bout à bout, située en vis-à-vis, porte le bord libre (22) et en ce que le rebord annulaire (12) est inséré entre les parties de paroi (16′, 17′) constituant la paroi double (16).

3. Jonction bout à bout selon l'une ou l'autre des revendications 1 ou 2, caractérisée en ce que le rebord annulaire (12) est enrobé au moins partiellement dans un produit d'étanchéité remplissant l'intérieur de l'anneau de bride (14) ou disposé entre les parties de paroi (16′, 17′).

Fig.1

Fig.2

Fig.3

Fig.4